# NEUE EUROPÄISCHE PATENTSCHRIFT

(11) **EP 1 238 026 B2**
(45) Veröffentlichungstag und Bekanntmachung des Hinweises auf die Entscheidung über den Einspruch: **24.01.2007**
(45) Hinweis auf die Patenterteilung: 23.06.2004
(21) Anmeldenummer: 00987357.1
(22) Anmeldetag: 06.12.2000
(51) Int. Cl.: C09D 17/00, C08J 3/22

(54) **PIGMENTKONZENTRATE UND VERFAHREN ZU IHRER HERSTELLUNG**
PIGMENT CONCENTRATES AND METHODS FOR PRODUCTION THEREOF
CONCENTRES DE PIGMENTS ET LEURS PROCEDES DE PRODUCTION

(30) Priorität: 13.12.1999 DE 19960122
(43) Veröffentlichungstag der Anmeldung: 11.09.2002
(73) Patentinhaber: BASF Aktiengesellschaft, 67056 Ludwigshafen (DE)
(72) Erfinder: DECKERS, Andreas, 55234 Flomborn (DE); WEBER, Wilhelm, 67435 Neustadt (DE); WEISS, Stefan, 69151 Neckargemünd (DE); KEENE VON KOENIG, Naria, Edlu, 67433 Neustadt (DE)
(86) Internationale Anmeldenummer: PCT/EP2000/012277
(87) Internationale Veröffentlichungsnummer: WO 2001/044387

(56) Entgegenhaltungen:
- EP-A- 0 719 802
- EP-A- 0 890 584
- EP-A- 0 896 983
- PATENT ABSTRACTS OF JAPAN vol. 1999, no. 09, 30. Juli 1999 (1999-07-30) & JP 11 106573 A (MITSUBISHI CHEMICAL CORP), 20. April 1999 (1999-04-20)
- JP-A-61236804 English Translation
- JP-A-62129303 English Translation
- Clarient direkt 07.10.1999
- Clariant "Clartext" Nr. 4 1999
- Clariant Newsletter Ausgabe 5 Juli 1999

## Beschreibung

Die Erfindung betrifft Pigmentkonzentrate, enthaltend mindestens ein Farbstoffpigment, ein Polyethylenwachs, das aus Ethylen und optional einem oder mehreren Olefinen mit einem Metallocenkatalysator hergestellt wird, optional einen thermoplastischen Kunststoff und optional Zuschlagstoffe, wobei als Metallocen eine Verbindung verwendet wird, ausgewählt aus
Rac.Ethylen-bis-[indenyl]-Zirkoniumdichlorid,
Rac.Ethylen-bis-[4,5,6,7-tetrahydroindenyl]-Zirkoniumdichlorid,
Rac.Dimethylsilyl-bis-[2-methylindenyl]-Zirkoniumdichlorid,
Rac.Tetramethylensilyl-bis-[2-Methylindenyl]-Zirkoniumdichlorid,
Rac.Dimethylsilyl-bis-[2-methylbenzo-(4,5)-indenyl]-Zirkoniumdichlorid,
Rac.Dimethylsilyl-bis-[2-methyl-4-tert.-butylcyclopentadienyl]-Zirkoniumdichlorid,
Rac.Dimethylsilyl-bis-[2,3,5-trimethylcyclopentadienyl]-Zirkoniumdichlorid,
Rac.Dimethylsilyl-bis-[2-methyl-4-phenylindenyl]-Zirkoniumdichlorid,
2,2-Isopropyliden-cyclopentadienyl-9-Fluorenyl-Zirkoniumdichlorid,
Diphenylmethyl-cyclopentadienyl-9-Fluorenyl-Zirkoniumdichlorid;
Bis-(*n*-butylcyclopentadienyl)-Zirkoniumdichlorid,
Bis-[2-methyl-4-*tert*.-butylcyclopentadienyl]-Zirkoniumdichlorid,
Bis-[2,3,5-trimethylcyclopentadienyl]-Zirkoniumdichlorid,
Bis-[indenyl]-Zirkoniumdichlorid,
Bis-[2-Methylindenyl]-Zirkoniumdichlorid,
Bis-[2-Methylbenzo-(4,5)-indenyl]-Zirkoniumdichlorid,
Bis-[4,5,6,7-Tetrahydroindenyl]-Zirkoniumdichlorid,
Bis-[2-Methyl-4-phenylindenyl]-Zirkoniumdichlorid;
Dimethylsilyl-*tert.*-butylamido-tetramethylcyclopentadienyl-Titandichlorid,
Dimethylsilyl*-iso*-propylamido-tetramethylcyclopentadienyl-Titandichlorid
2,3,5-Trimethylsilyl-*tert*.-butylamido-tetramethylcyclopentadienyl-Titandichlorid,
Dimethylsilyl-phenylamido-tetramethylcyclopentadienyl-Titandichlorid,
Dimethylsilyloxy-tetramethylcyclopentadienyl-Titandichlorid,
2,3,5-Trimethylsilyloxy-tetramethylcyclopentadienyl-Titandichlorid
sowie den korrespondierenden Dibromiden und Dimethylverbindungen.

Zahlreiche Pigmente werden in der Form eines Pigmentkonzentrats vermarktet, da dies die Verarbeitung beim Einfärben von Kunststoffen erleichtert. Diese Formulierungen enthalten im Allgemeinen neben dem Pigment ein Dispergiermittel, beispielsweise ein Wachs, sowie optional einen thermoplastischen Kunststoff, meistens ein Polyolefin. Der thermoplastische Kunststoff wird auch als Trägerpolymer bezeichnet. Das Wachs dient dazu, das Pigment in der Formulierung fein zu verteilen und in dieser Verteilung zu stabilisieren. Eine marktübliche Formulierung eines derartigen Pigmentkonzentrats ("Masterbatch") enthält 25 Gew.-%- Pigment, 10 Gew.-% Wachs und 65 Gew.-% eines Polyethylenkunststoffes. Als Wachs wird häufig ein Polyethylenwachs verwendet, dass sich beispielsweise durch radikalische Polymerisation oder Ziegler-Natta-Katalyse erhalten lässt. Das Polyethylenwachs kann beispielsweise durch Oxidation polar modifiziert werden. Die Verhältnisse der Einzelkomponenten können durchaus in gewissen Grenzen variiert werden.

Entscheidende Voraussetzung für die Anwendbarkeit eines derartigen Pigmentkonzentrats ist die richtige Auswahl der Wachskomponente. Obwohl selbst nicht farbig, beeinflusst sie die Brillanz des Pigmentkonzentrats. Für genauere Angaben vgl. beispielsweise die Produktbroschüre "Luwax^{®} - Anwendung in Pigmentkonzentraten" über Polyethylenwachse der BASF AG.

Die Pigment-Agglomerate müssen gut durch das Wachs benetzt werden, damit ein Zusammenklumpen der Agglomerate verhindert wird. Eine kleine Anzahl größerer Pigment-Agglomerate trägt weniger zur Farbwirkung des betreffenden Pigments bei als eine größere Anzahl kleinerer Pigment-Agglomerate.

Es ist also eine Aufgabe, während des Formulierungsprozesses keine großen Pigment-Agglomerate entstehen zu lassen. Weiterhin ist es wünschenswert, eventuell vorher gebildete agglomerierte Pigmente zu separieren und in die sogenannten Primärpartikel aufzuspalten. Schließlich sollen die Primärpartikel auch nach dem Formulierungsprozess separiert bleiben und beim Abkühlen nicht wieder aggregieren.

Dazu werden mehrere Anforderungen an das Wachs gestellt. Eine dieser Anforderungen betrifft die Viskosität der Schmelze. Die Viskosität der Schmelze sollte möglichst niedrig sein, damit während der Formulierung, die üblicherweise durch Mischen bei einer Temperatur oberhalb der Schmelztemperatur des Wachses erfolgt, das aufgeschmolzene Wachs gut durch die Hohlräume innerhalb der Agglomerate des Pigments penetrieren kann. Durch die so ausgeübten Scherkräfte erfolgt ein leichteres Aufspalten der Agglomerate in die Primärpartikel.

Auch die Benetzungsfähigkeit der Wachse sollte gut sein.

Polare Gruppen können grundsätzlich durch mehrere Verfahrensschritte in ein Wachs eingeführt werden.

Eine Methode ist, das Wachs durch Luftsauerstoff oder Peroxidverbindungen teilweise abzubauen. Als Peroxidverbindungen können beispielsweise Wasserstoffperoxid (H₂O₂) oder Dialkylperoxide verwendet werden. Durch partielle Abbaumethoden werden Hydroxylgruppen und Carboxylgruppen als polare Gruppen in die Makromoleküle eingeführt. Diese polaren Gruppen sind ungleichmäßig über das Molekül verteilt, wodurch die Benetzungsfähigkeit der Molekülketten der Wachse nicht optimal sind.

Eine andere Methode besteht darin, polare Comonomere wie Acrylsäure, Methacrylsäure, Acrylsäureester, Methacrylsäureester oder Vinylacetat, die optional verseift werden können, zu verwenden. Nachteilig ist an diesem Verfahren, dass polare Comonomere als Katalysatorgifte für Ziegler-Natta-Katalysatoren agieren können und deshalb die Katalysatoren an Aktivität verlieren. Ein weiterer Nachteil ist, dass die Comonomere nicht gleichmäßig in die Wachse eingebaut werden. Üblicherweise bauen Comonomere bevorzugt in die kurzkettigen Moleküle ein, was zu unerwünscht uneinheitlichen Eigenschaften des Wachses führt.

Es hat sich nun gezeigt, dass viele Pigmentkonzentrate für hochwertige Anwendungen eine ungenügende Brillanz aufweisen. Die Lösung dieses Problems kann nur begrenzt durch einen größeren Anteil an Pigment gelingen. Für den Herstellungspreis eines Pigmentkonzentrats spielt der Preis des Pigments die entscheidende Rolle. Deshalb würde ein höherer Anteil an Pigment wirtschaftlich nachteilig sein.

Umgekehrt kann es auch wünschenswert sein, für weniger hochwertige Anwendungen ein äquivalentes Pigmentkonzentrat bereitzustellen, welches geringere Anteile des teuren Pigments aufweist.

Aus EP-A 0 890 584 die ist Verwendung von Metallocen-Polypropylenwachsen mit einem Isotaktizitätsindex größer als 70 % für Masterbatches bekannt. Nachteilig an der Verwendung eines Metallocen-Polypropylen-Wachses ist jedoch, dass zur Herstellung von isotaktischem Polypropylen spezielle racemische Isomere der Metallocene notwendig sind. Das bei den üblichen Synthesen anfallende meso-Isomer muss erst abgetrennt und danach entweder verworfen oder aber in einem weiteren Schritt in das gewünschte Racemat überführt werden.

Schließlich hat sich gezeigt, dass bei hohen Pigmentkonzentrationen die Brillanz der Masterbatche nicht mehr wesentlich steigt, was auf eine nicht mehr einwandfreie Dispergierqualität zurück zu führen ist. Schlecht dispergierte Agglomerate lassen sich beispielsweise mikroskopisch nachweisen.

Es bestand also die Aufgabe,
- Pigmentkonzentrate bereitzustellen, mit denen sich Kunststoffformkörper und Kunststoffflächengebilde einfärben lassen, die einfach herzustellen sind und eine - verglichen mit dem Stand der Technik - verbesserte Brillanz aufweisen, ohne dass der Prozentsatz an Pigment erhöht werden muss,
- ein Verfahren zur Herstellung dieser Konzentrate bereitzustellen,
- Kunststoffformkörper und Kunststoffflächengebilde herzustellen, die mit den erfindungsgemäßen Pigmentkonzentraten eingefärbt sind, und
- ein Verfahren zum Einfärben von thermoplastischen Kunststoffen und Formkörpern mit den erfindungsgemäßen Konzentraten zu finden.

Es wurde gefunden, dass sich Metallocen-Polyethylen-Wachse deutlich besser als Dispergiermittel in Pigmentkonzentraten verwenden lassen als konventionelle Polyethylenwachse.

Dabei enthalten die Pigmentkonzentrate ("Masterbatche") die folgenden Komponenten:
- Mindestens ein Farbstoffpigment, wobei die Farbstoffpigmente aus anorganischen oder organischen Farbstoffpigmenten ausgewählt werden.

Beispiele für anorganische Pigmente sind
- Zinkweiß, Zinksulfid, Lithopone, Bleiweiß, Bleisulfat, Kreide, Titandioxid;
- Eisenoxidgelb, Cadmiumgelb, Nickeltitangelb, Chromtitangelb, Chromgelb, Bleichromat, Bismutvanadat, Neapelgelb oder Zinkgelb
- Ultramarinblau, Kobaltblau, Manganblau, Eisenblau,
- Ultramaringrün, Kobaltgrün, Chromoxid (Chromoxidgrün);
- Ultramarinviolett, Kobaltviolett, Manganviolett;
- Ultramarinrot, Molybdatrot, Chromrot, Cadmiumrot;
- Eisenoxidbraun, Chromeisenbraun, Zinkeisenbraun, Mangantitanbraun;
- Eisenoxidschwarz, Eisen-Mangan-Schwarz, Spinellschwarz, Ruß;
- orangefarbene Spinelle und Korunde, Cadmiumorange, Chromorange, Bleimolybdat;
- Aluminium oder Cu/Zn-Legierung;

Beispiele für organische Pigmente sind
- Metall-Phthalocyanine wie Phthalocyaninblau oder Phthalocyaningrün, weiterhin Perylenrot, Diarylgelb, Isoindolingelb, Chinophthalon-Pigmente, Chinacridon-Pigmente, Benzimidazolon-Pigmente, Malachitgrün, Thioindigo, Monoazopigmente, Disazopigmente, verlackte Azopigmente, Naphthol AS-Pigmente, Benzimidazolon-Pigmente, Diketopyrrolopyrrole, Indanthron, Azokondensations-Pigmente, Disazokondensations-Pigmente, Anthrachinon-Pigmente, Pyrazolone, Perinone, Aminoketon-Pigmente, Indigo oder Triphenylmethan-Pigmente.
   Übersichten über gängige anorganische und organische Pigmente finden sich beispielsweise in K. Leissler und G. Rösch, *Kunststoffe* **1996,** *86*, 965 sowie in *Ullmann's Enyclopädie der technischen Chemie,* 4. Auflage, Stichworte: Pigmente: Einleitung; Bd. 18, S. 547 ff., Organische Pigmente, Bd. 18, S. 661 ff; Thieme Verlag Stuttgart, **1977**. Es können Konzentrate mit einem Pigment, aber auch Abmischungen mit zwei, drei oder mehr verschiedenen Pigmenten hergestellt werden.
- Polyethylenwachs, wobei es sich bei diesem Polyethylenwachs um eine wachsartige Formmasse aus Polyethylen oder Copolymere von Ethylen mit je 0 bis 20 mol-% eines oder mehrerer Comonomerer wie Propen, 1-Buten, 1-Penten, 1-Hexen, 1-Octen, 1-Decen oder 1-Undecen handelt. Bevorzugt ist Polyethylenwachs mit 0 bis 10 mol-% Propen, 1-Buten, 1-Penten oder 1-Hexen. Die mittleren Molmassen M_{w} dieser Polyolefinwachse betragen von 500 bis 20.000 g, bevorzugt von 2.000 bis 10.000 g und besonders bevorzugt 3.000 bis 8.000 g. Die Q-Werte liegen im Bereich von 1,5 bis 5, bevorzugt von 1,8 bis 3,5 und besonders bevorzugt von 2 bis 3. Die Schmelzpunkte dieser Wachse betragen von 80 bis 165°C, bevorzugt von 100 bis 140°C und besonders bevorzugt von 105 bis 120°C.
- Optional eines thermoplastischen Kunststoffes als Trägerpolymer, wobei es sich bei diesem Kunststoff beispielsweise um Polyethylen, Polypropylen, Polystyrol, Polyoxymethylen, Polystyrol-Copolymere wie Styrol-Butadiencopolymere, Acrylnitril-Butadien-Styrol-Terpolymere oder Polyvinylchlorid sowie Copolymerisate von Ethylen mit 0,1 bis 20 mol-% 1-Buten, 1-Penten, 4-Methyl-1-Penten, 1-Hexen, 1-Octen, 1-Decen oder 1-Undecen handelt;
- Optional 0 bis 10 Gew.-% Zuschlagstoffe wie Antioxidantien; bevorzugt sind Antioxidantien wie beispielsweise sterisch gehinderte Phenole oder sterisch gehinderte Amine "HALS"; ganz besonders bevorzugt sind sterisch gehinderte Phenole der Irganox^{®}-Marken der Firma Ciba.
   Die Mengenverhältnisse der verschiedenen Komponenten lassen sich in weiten Grenzen variieren. Dabei werden die Mengenverhältnisse so aneinander angepasst, dass sie sich insgesamt zu 100 Gew.-% addieren.
- Das Pigment oder die Pigmente werden in Mindestmengen von 1 Gew.-% verwendet, bevorzugt 5 Gew.-% und besonders bevorzugt 10 Gew.-%. In geringeren Anteilen kann keine ausreichende Farbstärke erzielt werden. Als Obergrenze sind 60 Gew.-% zu nennen, insbesondere 45 Gew.-%, weil die Pigmente der teuerste Bestandteil der Pigmentkonzentrate sind.
- Das Wachs wird in Trägerpolymer-haltigen Pigmentkonzentraten zu mindestens 1 Gew.-% verwendet, bevorzugt sind mindestens 2 Gew.-%, weil unterhalb dieses Gewichtsanteils keine ausreichende Benetzung von Pigment und Trägerpolymer gewährleistet ist. In Pigmentkonzentraten, die ein Trägerpolymer enthalten, werden als Maximum vorzugsweise 30 Gew.-% Wachs verwendet und besonders bevorzugt 20 Gew.-%, weil durch zu hohe Wachsmengen im Endprodukt die mechanischen Eigenschaften des einzufärbenden Kunststoffformkörpers oder Flächengebildes leiden können. Als Obergrenze ist in solchen Pigmentkonzentraten 90 Gew.-% sinnvoll, die ohne Verwendung des Trägerpolymers hergestellt werden sollen. Als Minimum für den Wachs-Anteil eines Trägerpolymer-freien Pigmentkonzentrats sind 40 Gew.-% zu nennen, weil andernfalls das Konzentrat zu teuer wird.
- Trägerpolymere werden optional zugegeben. In den Fällen, in denen Trägerpolymer verwendet wird, wird es einem Anteil von mindestens 30 Gew.-% verwendet, weil dadurch das spätere Untermischen des Pigmentkonzentrats bei der Herstellung der Kunststoffformkörper und Kunststoffflächengebilde erleichtert wird. Als sinnvolle Obergrenze ist 80 Gew.-% anzugeben.
- Zuschlagstoffe werden nur optional und dann in geringen Mengen zugegeben. Eine sinnvolle Untergrenze für Antioxidantien wie Irganox^{®} ist 0,1 Gew.-%, weil unterhalb dieser Menge kein signifikanter Oxidationsschutz mehr möglich ist; bevorzugt sind 0,5 Gew.-% und besonders bevorzugt ist 1 Gew.-%. Als Obergrenze sind 5 Gew.-% zu nennen, weil andernfalls die Verarbeitungseigenschaften des Pigments durch die niedermolekulare Komponente sichtbar beeinträchtigt werden; bevorzugt sind 2 Gew.-% und besonders bevorzugt ist 1,5 Gew.-%. Eine weitere Klasse von Zuschlagstoffen sind Bleisalze wie beispielsweise basisches Bleisulfat oder Bleistearat oder Mischungen derselben, die in Anteilen von jeweils 0,5 bis 2 Gew.-%, bevorzugt 1,0 bis 1,5 Gew.-% zugegeben werden.

Metallocen-Polyethylen-Wachse sind an sich bekannt. Sie werden beispielsweise in EP-A 0 321 851 und in EP-B 0 602 509 beschrieben. Ein Verfahren zur Herstellung dieser Metallocen-Polyolefin-Wachse wird in EP-B 0 602 509 offengelegt. Dazu wird als Metallocen eine Verbindung verwendet, gewählt aus
Rac.Ethylen-bis-[indenyl]-Zirkoniumdichlorid,
Rac.Ethylen-bis-[4,5,6,7-tetrahydroindenyl]-Zirkoniumdichlorid,
Rac.Dimethylsilyl-bis-[2-methylindenyl]-Zirkoniumdichlorid,
Rac.Tetramethylensilyl-bis-[2-Methylindenyl]-Zirkoniumdichlorid,
Rac.Dimethylsilyl-bis-[2-methylbenzo-(4,5)-indenyl]-Zirkoniumdichlorid,
Rac.Dimethylsilyl-bis-[2-methyl-4-tert.-butylcyclopentadienyl]-Zirkoniumdichlorid,
Rac.Dimethylsilyl-bis-[2,3,5-trimethylcyclopentadienyl]-Zirkoniumdichlorid,
Rac.Dimethylsilyl-bis-[2-methyl-4-phenylindenyl]-Zirkoniumdichlorid,
2,2-Isopropyliden-cyclopentadienyl-9-Fluorenyl-Zirkoniumdichlorid,
Diphenylmethyl-cyclopentadienyl-9-Fluorenyl-Zirkoniumdichlorid;
Bis-(*n*-butylcyclopentadienyl)-Zirkoniumdichlorid,
Bis-[2-methyl-4-*tert.*-butylcyclopentadienyl]-Zirkonium dichlorid,
Bis-[2,3,5-trimethylcyclopentadienyl]-Zirkoniumdichlorid,
Bis-[indenyl]-Zirkoniumdichlorid,
Bis-[2-Methylindenyl]-Zirkoniumdichlorid,
Bis-[2-Methylbenzo-(4,5)-indenyl]-Zirkoniumdichlorid,
Bis-[4,5,6,7-Tetrahydroindenyl]-Zirkoniumdichlorid,
Bis-[2-Methyl-4-phenylindenyl]-Zirkoniumdichlorid;
Dimethylsilyl-*tert*.-butylamido-tetramethylcyclopentadienyl-Titandichlorid,
Dimethylsilyl-*iso*-propylamido-tetramethylcyclopentadienyl-Titandichlorid
2,3,5-Trimethylsilyl-*tert*.-butylamido-tetramethylcyclopentadienyl-Titandichlorid,
Dimethylsilyl-phenylamido-tetramethylcyclopentadienyl-Titandichlorid,
Dimethylsilyloxy-tetramethylcyclopentadienyl-Titandichlorid,
2,3,5-Trimethylsilyloxy-tetramethylcyclopentadienyl-Titandichlorid
sowie den korrespondierenden Dibromiden und Dimethylverbindungen.

Damit Metallocene katalytisch aktiv sind, müssen sie mit einer Metalloceniumionen-bildenden Verbindung aktiviert werden. Geeignete Metalloceniumionen-bildenden Verbindungen sind ausgewählte Bor-Verbindungen mit elektronenziehenden Resten (z.B. Trispentafluorphenylboran, *N,N*-Dimethylanilinium-tetrakis-pentafluorphenylborat, Tri-n-butylammonium-tetrakis-pentafluorphenylborat, *N,N-*Dimethylanilinium-tetrakis-(3,5-bis-perfluormethyl)-phenylborat, Tri-n-butylammonium-tetrakis-(3,5-bisperfluormethyl)-phenylborat sowie Tritylium-tetrakispentafluorphenylborat). Diese Aktivatoren sind in EP-A 0 468 537 sowie EP-A 0 426 638 offengelegt. Bevorzugt sind Dimethylanilinium-tetrakis-pentafluorphenylborat, Trityliumtetrakispentafluorphenylborat sowie Trispentafluorphenylboran.

Eine andere geeignete Klasse Metalloceniumionen-bildender Verbindungen sind die Aluminoxane der Formeln **I a-b** (z.B. DE-A 30 07 725).

Die Struktur der Aluminoxane ist nicht genau bekannt. Es handelt sich bei ihnen um Produkte, die durch vorsichtige partielle Hydrolyse von Aluminiumalkylen erhalten werden (s. DE-A 30 07 725). Diese Produkte liegen nicht rein vor, sondern als Gemische von offenkettigen und cyclischen Strukturen des Typs I a und b. Diese Gemische liegen vermutlich in einem dynamischen Gleichgewicht zueinander vor.

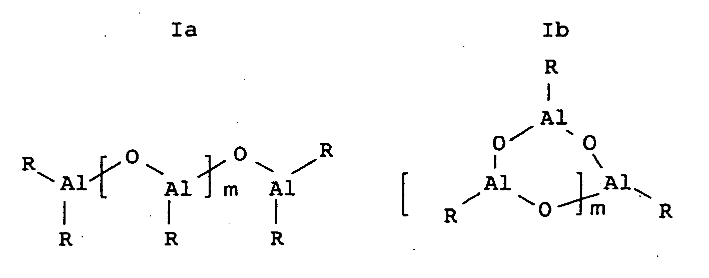

In Formel I a und b
sind die Reste R
gleich oder verschieden und unabhängig voneinander
- C₁-C₁₂-Alkyl wie Methyl, Ethyl, n-Propyl, iso-Propyl, n-Butyl, iso-Butyl, sec.-Butyl, tert.-Butyl, n-Pentyl, iso-Pentyl, sec.-Pentyl, neo-Pentyl, 1,2-Dimethylpropyl, iso-Amyl, n-Hexyl, iso-Hexyl, sec.-Hexyl, n-Heptyl, iso-Heptyl, n-Octyl, n-Nonyl,-n-Decyl, und n-Dodecyl; bevorzugt C₁-C₆-Alkyl wie Methyl, Ethyl, n-Propyl, iso-Propyl, n-Butyl, iso-Butyl, sec.-Butyl, tert.-Butyl, n-Pentyl, iso-Pentyl, sec.-Pentyl, neo-Pentyl, 1,2-Dimethylpropyl, iso-Amyl, n-Hexyl, iso-Hexyl, sec.-Hexyl, besonders bevorzugt ist Methyl;
- C₃-C₁₂-Cycloalkyl wie Cyclopropyl, Cyclobutyl, Cyclopentyl, Cyclohexyl, Cycloheptyl, Cyclooctyl, Cyclononyl, Cyclodecyl, Cycloundecyl und Cyclododecyl; bevorzugt sind Cyclopentyl, Cyclohexyl und Cycloheptyl;
- C₇- bis C₂₀-Aralkyl, bevorzugt C₇- bis C₁₂-Phenylalkyl wie Benzyl, 1-Phenethyl, 2-Phenethyl, 1-Phenyl-propyl, 2-Phenyl-propyl, 3-Phenyl-propyl, 1-Phenyl-butyl, 2-Phenyl-butyl, 3-Phenyl-butyl und 4-Phenyl-butyl, besonders bevorzugt Benzyl, oder
- C₆-C₁₄-Aryl wie Phenyl, 1-Naphthyl, 2-Naphthyl, 1-Anthryl, 2-Anthryl, 9-Anthryl, 1-Phenanthryl, 2-Phenanthryl, 3-Phenanthryl, 4-Phenanthryl und 9-Phenanthryl, bevorzugt Phenyl, 1-Naphthyl und 2-Naphthyl, besonders bevorzugt Phenyl; und
   m ist eine ganze Zahl von 0 bis 40, bevorzugt von 0 bis 25 und besonders bevorzugt von 0 bis 22.

In der Literatur werden auch käfigartige Strukturen für Aluminoxane diskutiert (Y. Koide, S.G. Bott, A.R. Barron *Organometallics* **1996**, *15*, 2213-26; A.R. Barron *Macromol. Symp.* **1995**, *97*, 15-25). Unabhängig davon, wie die Struktur der Aluminoxane tatsächlich aussieht, sind sie als Aktivatoren für Metallocene geeignet.

Metallocen und Metalloceniumionen-bildende Verbindung bilden zusammen ein Katalysatorsystem. Durch Zugabe einer weiteren Aluminiumalkylverbindung der allgemeinen Formel Al(R²⁵)₃ kann die Aktivität dieses Katalysatorsystems weiter gesteigert werden.

Durch Zugabe von weiterem Aluminiumalkyl wird nicht nur die Aktivität des Katalysatorsystems erhöht; das Aluminiumalkyl wirkt auch als Molmassenregler. Ein weiterer effektiver Molmassenregler ist Wasserstoff. Ferner kann die Molmasse gezielt durch die Reaktionstemperatur und die Verweilzeit geregelt werden.

Moderne großtechnische Herstellungsverfahren für Polyolefinwachse sind Lösungsverfahren, Suspensionsverfahren, Massepolymerisationsverfahren in flüssigem oder überkritischem Monomer sowie Gasphasenverfahren, wobei es sich bei letzteren um gerührte Gasphasen oder um Gasphasenwirbelschichtverfahren handeln kann.

Damit Metallocene in Suspensionsverfahren, Massepolymerisationsverfahren oder Gasphasenverfahren eingesetzt werden können, ist es vorteilhaft, sie auf einem festen Träger zu immobilisieren. Andernfalls kann es zu Morphologieproblemen des Polymers (Brocken, Wandbeläge, Verstopfungen in Leitungen oder Wärmetauschern) kommen, die zum Abschalten der Anlage zwingen.

Das Katalysatorsystem aus Metallocen und Aktivator lässt sich gut auf einem festen Träger abscheiden. Als Trägermaterialien kommen z.B. poröse Metalloxide von Metallen der Gruppen 2-14 oder Mischungen derselben infrage, weiterhin Schichtsilikate, aber auch feste Halogenide von Metallen der Gruppen 1, 2 und 13. Bevorzugte Beispiele für Metalloxide der Gruppen 2-14 sind SiO₂, B₂O₃, Al₂O₃, MgO, CaO und ZnO. Bevorzugte Schichtsilikate sind Montmorrilonite oder Bentonite; bevorzugte Halogenide sind MgCl₂ oder amorphes AlF₃.

Besonders bevorzugte Trägermaterialien sind sphärische Kieselgele und Alumosilikatgele der allgemeinen Formel SiO₂·a Al₂O₃, wobei a allgemein für eine Zahl im Bereich von 0 bis 2 steht, bevorzugt 0 bis 0,5. Derartige Kieselgele sind im Handel erhältlich, z.B. Silica Gel 332 oder S 2101 der Fa. W.R. Grace.

Als Partikelgröße des Trägermaterials haben sich mittlere Teilchendurchmesser von 1-300 µm bewährt, bevorzugt von 20 bis 80 µm, wobei der Teilchendurchmesser durch bekannte Methoden wie Siebmethoden bestimmt wird. Das Porenvolumen dieser Träger beträgt 1,0 bis 3,0 ml/g, bevorzugt von 1,6 bis 2,2 ml/g und besonders bevorzugt von 1,7 bis 1,9 ml/g. Die BET-Oberfläche beträgt 200 bis 750 m²/g, bevorzugt 250 bis 400 m²/g.

Um dem Trägermaterial anhaftende Verunreinigungen, insbesondere Feuchtigkeit, zu entfernen, können die Trägermaterialien vor der Dotierung ausgeheizt werden, wobei sich Temperaturen von 45 bis 1000°C eignen. Temperaturen von 100 bis 750°C sind für Kieselgele und andere Metalloxide besonders geeignet; für MgCl₂-Träger sind Temperaturbereiche von 50 bis 100°C bevorzugt. Dieses Ausheizen sollte über einen Zeitraum von 0,5 bis 24 Stunden erfolgen, wobei Ausheizzeiten von 1 bis 12 Stunden bevorzugt sind. Die Druckbedingungen sind an sich unkritisch; das Ausheizen kann bei Atmosphärendruck erfolgen. Vorteilhaft sind jedoch verminderte Drücke von 0,1 bis 500 mbar, besonders vorteilhaft ist ein Bereich von 1 bis 100 mbar und ganz besonders vorteilhaft ein Bereich von 2 bis 20 mbar. Auch eine chemische Vorbehandlung des Trägermaterials ist möglich.

Zur Dotierung des Katalysators verfährt man im Allgemeinen so, dass man das Trägermaterial in einem Suspensionsmittel aufschlämmt und diese Suspension mit der Lösung des Komplexsystems vereinigt. Dabei beträgt das Volumen des Suspensionsmittels das 1 bis 20-fache des Porenvolumens des Katalysatorträgers. Anschließend kann der Katalysator durch eine geeignete Methode vom Suspensionsmittel getrennt werden, wie filtrieren, zentrifugieren oder eindampfen.

Die mit Hilfe eines der oben genannten Metallocen-Katalysators nach einem der genannten Polymerisationsverfahren erhaltenen Polyolefinwachse lassen sich durch verschiedene Methoden zu Masterbatchen weiterverarbeiten, denen gemeinsam ist, dass Wachs und Trägerpolymer im entscheidenden Schritt aufgeschmolzen werden, das Pigment aber nicht, und das oder die Pigmente sowie optional Zuschlagsstoffe eingearbeitet, werden.

Vor der eigentlichen Mischung können die Komponenten optional vorgemischt werden, wozu sich Trommel- oder Taumelmischer besonders eignen. Auch Mikronisierungen können optional durchgeführt werden.

Bei der eigentlichen Mischung unterscheidet man diskontinuierliche und kontinuierliche Verfahren. Für diskontinuierliche Verfahren lassen sich einfache Kneter verwenden; kontinuierliche Verfahren lassen sich beispielsweise in Schnellmischern, Einschneckenextrudern, Zweischneckenextrudern, Buss-Knetern, Planetwalzenextrudern, offenen Doppelmuldenknetern oder Schnellrührern ausführen.

Anschließend werden die Pigmentkonzentrate in üblicher Weise granuliert. Dazu lassen sich Stranggranulatoren verwenden, bei denen das Gemisch als Strang unter Wasser abgekühlt werden und dann entweder noch im oder aber nach Verlassen des Wasserbades zu Pellets oder Granulat geschnitten wird. Weiterhin sind Lochplatten als Schneidemittel geeignet ("Heißabschlagverfahren").

Zur Herstellung der Formkörper und Flächengebilde geht man so vor, dass man zunächst ein Gemisch aus
- 0,01 bis 10 Gew.-% Pigmentkonzentrat, bevorzugt 0,5 bis 5 Gew.-% Pigmentkonzentrat und besonders bevorzugt 0,5 bis 2,5Gew.-% Pigmentkonzentrat, mit
- 90 bis 99,99 Gew.-% Polymer, bevorzugt 95 bis 99,5 und besonders bevorzugt 97,5 bis 98,5 Gew.-% Polymer sowie optional
- 0 bis 5 Gew.-% Zuschlagstoffen, wobei Antioxidantien oder Biozide bevorzugte Zuschlagstoffe sind, herstellt.

Als Polymer sind geeignet: Polyethylen, Polypropylen, Polystyrol, Polyoxymethylen, Polyethylenterephthalat, Polybutylenterephthalat, Polymethylmethacrylat, Polyethersulfone, Polysulfone, Polyetherketone, Polystyrol-Copolymere, Acrylnitril-Butadien-Styrol-Terpolymere, Polyamide wie Nylon-6 oder Nylon-6,6, Polyvinylchlorid sowie Copolymerisate von Ethylen mit 0,1-20 mol-% 1-Buten, 1-Penten, 1-Hexen, 4-Methyl-1-Penten, 1-Octen, 1-Decen oder 1-Undecen. Dabei können das einzufärbende Polymer und das Trägerpolymer des Masterbatchs gleich sein, müssen aber nicht.

Zum Mischen der Pigmentkonzentrate mit den Polymeren sowie optional den Zuschlagstoffen lassen sich prinzipiell die gleichen Verfahren einsetzen wie zur Herstellung des Masterbatchs selber. Für diskontinuierliche Verfahren lassen sich wiederum einfache Kneter verwenden; kontinuierliche Verfahren lassen sich beispielsweise in Schnellmischern, Einschneckenextrudern, Zweischneckenextrudern, Buss-Knetern, Planetwalzenextrudern, offenen Doppelmuldenknetern oder Schnellrührern ausführen. Dabei sind kontinuierliche Verfahren bevorzugt.

Die Herstellung der Formkörper und Flächengebilde kann durch Spritzgießen, Folienextrusion oder Gießen bei Temperaturen oberhalb des Schmelzpunkts des Polymers erfolgen. Die Verarbeitungseigenschaften der erfindungsgemäßen Formkörper und Flächengebilde werden durch den Einsatz der erfindungsgemäßen Pigmentkonzentrate nicht unvorteilhaft beeinflusst.

Die nach dem erfindungsgemäßen Verfahren erhaltenen Formkörper und Flächengebilde unterscheiden sich von den im Handel erhältlichen Formkörpern und Flächengebilden durch eine deutlich höhere Brillanz in der Farbe. Die mechanischen Eigenschaften der Werkstoffe werden durch den Einsatz der erfindungsgemäßen Pigmentkonzentrate nicht unvorteilhaft beeinflusst.

### Arbeitsbeispiel:

Als Metallocenkatalysator wurde auf Kieselgel geträgertes bis-(*n*-Butylcylopentadienyl)-Zirkoniumdichlorid verwendet, das mit MAO aktiviert wurde. Das Verfahren zur Herstellung des Metallocen-Katalysators ist in EP-B 0 571 882, Beispiel 5 beschrieben, wobei folgende Modifikationen der Rezeptur durchgeführt wurden:

| Stoff | Verwendeter Katalysator | Katalysator EP 0 571 882 |
|---|---|---|
| Metallocen | (n-C₄H₉-C₅H₄)₂ZrCl₂ | Cp₂ZrCl₂ |
| Kieselgel | S2101 | Aerosil^{®} R 812 |
| Suspensionsmittel | n-Heptan | Dieselöl |

Das Metallocen-Polyethylenwachs wurde in einer Apparatur hergestellt, wie sie in EP-B 0 602 509, Beispiel 1 bzw. Zeichnung Seite 19 beschrieben ist. Es wurde ohne Wasserstoff bei 60°C polymerisiert, wobei als Suspensionsmittel Isobutan statt Propan verwendet wurde.

Das so erhaltene Wachs hatte die folgenden Eigenschaften: Festpunkt 128°C, M_{w}: 4900 g, Mₙ: 2200 g.

Als Komponenten für das erfindungsgemäße Pigmentkonzentrat im Arbeitsbeispiel 1 wurden die folgenden Komponenten verwendet:
25 Gew.-% Heliogen^{®} Blau (kommerziell erhältlich bei BASF AG)
15 Gew.-% Polyethylenwachs,
60 Gew.-% Polyethylen (Lupolen^{®} 1800 S) als Granulat (kommerziell erhältlich beiElenac GmbH)

Im analog verarbeiteten Arbeitsbeispiel 2 wurden die folgenden Komponenten verwendet:
25 Gew.-% Heliogen^{®} Grün, (kommerziell erhältlich bei BASF AG)
15 Gew.-% Polyethylenwachs,
60 Gew.-% Polyethylen (Lupolen^{®} 1800 S) als Granulat (kommerziell erhältlich beiElenac GmbH)

Die Komponenten wurden in einem Schnellrührer vorgemischt und bis zum Schmelzpunkt des Wachses erwärmt. Das Wachs benetzte dabei das Pigment, machte es staubfrei und trug zur Dispergierung des Pigments in der Wachsphase bei. Anschließend wurde diese Mischung auf einen Doppelschneckenextruder aufgegeben. Die Temperatur wurde um weitere 10°C erhöht. Während dieses Arbeitsschritts wurde das PE-Granulat mit einer dünnen Wachsschicht ummantelt. Nach der Extrusion wurde das Pigmentkonzentrat so vorsichtig abgekühlt, dass die fest gewordene Pigment/Wachsschicht nicht voneinander gelöst wurden.

Die Herstellung der Vergleichsprodukte erfolgte analog. Als Wachse wurden kommerziell erhältliche Proben verwendet.

Zur Überprüfung der Farbintensität wurden jeweils 1 g Pigmentkonzentrat aus den angegebenen Beispielen mit 91,5 g Lupolen 50D und 7,5 g TiO₂ als optischem Aufheller vorgemischt, auf einer Blasformmaschine bei 130 bis 150°C gemischt und zu Kanistern blasgeformt.

Zur Beurteilung der Farbintensitäten wurde ein 5 x 5 cm großes Stück aus den Kanistern herausgeschnitten und im Wellenlängenbereich von 400-700 nm spektralphotometrisch (Gerät Spectraflash 600) der Firma Datacolor nach DIN 6176 untersucht.

Die Ergebnisse gehen aus Tabelle 1 hervor.

**Tabelle 1 Farbstärkebeurteilungen der Beispiele 1-2 und V 1a/b sowie V 2a/b**

| | **Polyethylenwachs** | **Pigment** | **Farbstärkebeurteilung** |
|---|---|---|---|
| Beispiel Nummer | (Herstellungsprozess) | Phthalocyanin | |
| 1 | Metallocen | Heliogen^{®} Blau K 6911 D | 100 % |
| V 1a | Hochdruck | Heliogen Blau K 6911 D | 87,7 % |
| V 1b | Ziegler-Natta | Heliogen Blau K 6911 D | 91,9 % |
| 2 | Metallocen | Heliogen Grün K 8730 | 100 % |
| V 2a | Hochdruck | Heliogen Grün K 8730 | 84,8 % |
| V 2b | Ziegler-Natta | Heliogen Grün K 8730 | 93,2 % |

## Patentansprüche

1. Pigmentkonzentrate, enthaltend mindestens ein Farbstoffpigment, ein Polyethylenwachs, das aus Ethylen und je 0 bis 20 mol-% eines oder mehrerer Comonomerer, gewählt aus Propen, 1-Buten, 1-Penten, 1-Hexen, 1-Octen, 1-Decen oder 1-Undecen mit einem Metallocenkatalysator hergestellt wird, optional einen thermoplastischen Kunststoff und optional Zuschlagstoffe, wobei als Metallocen eine Verbindung verwendet wird, ausgewählt aus
Rac. Ethylen-bis-[indenyl]-Zirkoniumdichlorid,
Rac. Ethylen-bis-[4,5,6,7-tetrahydroindenyl]-Zirkoniumdichlorid,
Rac. Dimethylsilyl-bis-[2-methylindenyl]-Zirkoniumdichlorid,
Rac. Tetramethylensilyl-bis-[2-Methylindenyl]-Zirkoniumdichlorid,
Rac.Dimethylsilyl-bis-[2-methylbenzo-(4,5)-indenyl]-Zirkoniumdichlorid,
Rac. Dimethylsilyl-bis-[2-methyl-4-tert.-butylcyclopentadienyl]-Zirkoniumdichlorid,
Rac.Dimethylsilyl-bis-[2,3,5-trimethylcyclopentadienyl]-Zirkoniumdichlorid,
Rac.Dimethylsilyl-bis-[2-methyl-4-phenylindenyl]-Zirkoniumdichlorid,
2,2-Isopropyliden-cyclopentadienyl-9-Fluorenyl-Zirkoniumdichlorid,
Diphenylmethyl-cyclopentadienyl-9-Fluorenyl-Zirkoniumdichlorid;
Bis-(*n*-butylcyclopentadienyl)-Zirkoniumdichlorid,
Bis- [2-methyl-4-*tert*.-butylcyclopentadienyl]-Zirkoniumdichlorid,
Bis-[2,3,5-trimethylcyclopentadienyl]-Zirkoniumdichlorid,
Bis-[indenyl]-Zirkoniumdichlorid,
Bis-[2-Methylindenyl]-Zirkoniumdichlorid,
Bis-[2-Methylbenzo-(4,5)-indenyl]-Zirkoniumdichlorid,
Bis-[4,5,6,7-Tetrahydroindenyl]-Zirkoniumdichlorid,
Bis-[2-Methyl-4-phenylindenyl]-Zirkoniumdichlorid,
Dimethylsilyl-*tert*.-butylamido-tetramethylcyclopentadienyl-Titandichlorid,
Dimethylsilyl-*iso*-propylamido-tetramethylcyclopentadienyl-Titandichlorid
2,3,5-Trimethylsilyl-*tert*.-butylamido-tetramethylcyclopentadienyl-Titandichlorid,
Dimethylsilyl-phenylamido-tetramethylcyclopentadienyl-Titandichlorid,
Dimethylsilyloxy-tetramethylcyclopentadienyl-Titandichlorid,
2,3,5-Trimethylsilyloxy-tetramethylcyclopentadienyl-Titandichlorid
sowie den korrespondierenden Dibromiden und Dimethylverbindungen.

2. Pigmentkonzentrate gemäß Anspruch 1, enthaltend mindestens ein Farbstoffpigment, ein Polyethylenwachs, einen thermoplastischen Kunststoff sowie Zuschlagstoffe.

3. Pigmentkonzentrate gemäß Anspruch 1, enthaltend mindestens ein Farbstoffpigment, ein Polyethylenwachs sowie Zuschlagstoffe.

4. Verfahren zur Herstellung von Pigmentkonzentraten gemäß Anspruch 3, **dadurch gekennzeichnet, dass** die Komponenten oberhalb des Schmelzpunkts des Wachses gemischt werden.

5. Verfahren zur Herstellung von Pigmentkonzentraten gemäß den Ansprüchen 1 bis 2, **dadurch gekennzeichnet, dass** die Komponenten oberhalb des Schmelzpunkts von Wachs und Trägerpolymer gemischt werden.

6. Kunststoffformkörper und Kunststoffflächengebilde, eingefärbt mit Pigmentkonzentraten gemäß den Ansprüchen 1 bis 5.

7. Verfahren zum Einfärben von Formkörpern und Flächengebilden gemäß Anspruch 6 mit Pigmentkonzentraten gemäß den Ansprüchen 1 bis 4, **dadurch gekennzeichnet, dass** die Komponenten durch Homogenisieren in der Schmelze gemischt werden.

## Claims

1. A pigment concentrate comprising at least one dye pigment, a polyethylene wax which is prepared from ethylene and in each case from 0 to 20 mol% of one or more comonomers selected from among propene, 1-butene, 1-pentene, 1-hexene, 1-octene, 1-decene or 1-undecene using a metallocene catalyst, optionally a thermoplastic and optionally additives, wherein a compound selected from among
rac-ethylenebis[indenyl]zirconium dichloride,
rac-ethylenebis[4,5,6,7-tetrahydroindenyl]zirconium dichloride,
rac-dimethylsilylbis[2-methylindenyl]zirconium dichloride,
rac-tetramethylenesilylbis[2-methylindenyl]zirconium dichloride,
rac-dimethylsilylbis[2-methylbenzo(4,5)-indenyl]zirconium dichloride,
rac-dimethylsilylbis[2-methyl-4-tert-butylcyclopentadienyl]zirconium dichloride,
rac-dimethylsilylbis[2,3,5-trimethylcyclopentadienyl]zirconium dichloride,
rac-dimethylsilylbis[2-methyl-4-phenylindenyl]zirconium dichloride,
2,2-isopropylidenecyclopentadienyl-9-fluorenylzirconium dichloride,
diphenylmethylcyclopentadienyl-9-fluorenylzirconium dichloride;
bis(n-butylcyclopentadienyl)zirconium dichloride,
bis[2-methyl-4-tert-butylcyclopentadienyl]zirconium dichloride,
bis[2,3,5-trimethylcyclopentadienyl]zirconium dichloride,
bis[indenyl]zirconium dichloride,
bis[2-methylindenyl]zirconium dichloride,
bis[2-methylbenzo(4,5)indenyl]zirconium dichloride,
bis[4,5,6,7-tetrahydroindenyl]zirconium dichloride,
bis[2-methyl-4-phenylindenyl]zirconium dichloride;
dimethylsilyl-tert-butylamidotetramethylcyclopentadienyltitanium dichloride,
dimethylsilylisopropylamidotetramethylcyclopentadienyltitanium dichloride,
2,3,5-trimethylsilyl-tert-butylamidotetramethylcyclopentadienyltitanium dichloride,
dimethylsilylphenylamidotetramethylcyclopentadienyltitanium dichloride,
dimethylsilyloxytetramethylcyclopentadienyltitanium dichloride,
2,3,5-trimethylsilyloxytetramethylcyclopentadienyltitanium dichloride,
and the corresponding dibromides and dimethyl compounds is used as metallocene.

2. The pigment concentrate according to claim 1, comprising at least one dye pigment, a polyethylene wax, a thermoplastic and additives.

3. The pigment concentrate according to claim 1, comprising at least one dye pigment, a polyethylene wax and additives.

4. A process for preparing the pigment concentrate according to claim 3, wherein the components are mixed above the melting point of the wax.

5. A process for preparing the pigment concentrate according to claims 1 and 2, wherein the components are mixed above the melting point of wax and carrier polymer.

6. A plastic molding and plastic sheet colored with the pigment concentrate according to claims 1 to 5.

7. A method of coloring the plastic molding and plastic sheet according to claim 6 with the pigment concentrate according to claims 1 to 4, wherein the components are mixed in the melt by homogenization.

## Revendications

1. Concentrés de pigments contenant au moins un pigment colorant, une cire de polyéthylène, qui est préparée à partir d'éthylène et à chaque fois avec de 0 à 20% en moles d'un ou plusieurs comonomères, choisis parmi le propène, le 1-butène, le 1-pentène, le 1-hexène, le 1-octène, le 1-décène ou le 1-undécène, avec un catalyseur au métallocène, en option une matière synthétique thermoplastique et en option des charges, tandis qu'on utilise comme métallocène un composé choisi parmi les suivants:
dichlorure d'éthylène-bis-[indényl]-zirconium rac.,
dichlorure d'éthylène-bis-[4,5,6,7-tétrahydroindényl]-zirconium rac.,
dichlorure de diméthylsilyl-bis-[2-méthylindényl]-zirconium rac.,
dichlorure de tétraméthylènesilyl-bis-[2-méthylindényl]-zirconium rac.,
dichlorure de diméthylsilyl-bis-[2-méthylbenzo-(4,5)-indényl]-zirconium rac.,
dichlorure de diméthylsilyl-bis-[2-méthyl-4-tert-butylcyclopentadiényl]-zirconium rac.,
dichlorure de diméthylsilyl-bis-[2,3,5-triméthylcyclopentadiényl]-zirconium rac.,
dichlorure de diméthylsilyl-bis-[2-méthyl-4-phénylindényl]-zirconium rac.,
dichlorure de 2,2-isopropylidène-cyclopentadiényl-9-fluorénylzirconium,
dichlorure de diphénylméthyle-cyclopentadiényl-9-fluorénylzirconium;
dichlorure de bis-(n-butylcyclopentadiényl)-zirconium,
dichlorure de bis-[2-méthyl-4-tert-butylcyclopentadiényl]-zirconium,
dichlorure de bis-[2,3,5-triméthylcyclopentadiényl]-zirconium,
dichlorure de bis-[indényl]-zirconium,
dichlorure de bis-[2-méthylindényl]-zirconium,
dichlorure de bis-[2-méthylbenzo-(4,5)-indényl]-zirconium,
dichlorure de bis-[4,5,6,7-tétrahydroindényl]-zirconium,
dichlorure de bis-[2-méthyl-4-phénylindényl]-zirconium;
dichlorure de diméthylsilyl-tert-butylamido-tétraméthylcyclopentadiényl-titane,
dichlorure de diméthylsilyl-isopropylamido-tétraméthylcyclopentadiényl-titane,
dichlorure de 2,3,5-triméthylsilyl-tert-butylamido-tétraméthylcyclopentadiényl-titane,
dichlorure de diméthylsilyl-phénylamido-tétraméthylcyclopentadiényl-titane,
dichlorure de diméthylsilyloxy-tétraméthylcyclopentadiényltitane,
dichlorure de 2,3,5-triméthylsilyloxy-tétraméthylcyclopentadiényl-titane,
ainsi que les dibromures et les composés de type diméthyle correspondants.

2. Concentrés de pigments selon la revendication 1, contenant au moins un pigment colorant, une cire de polyéthylène, une matière synthétique thermoplastique, ainsi que des charges.

3. Concentrés de pigments selon la revendication 1, contenant au moins un pigment colorant, une cire de polyéthylène, ainsi que des charges.

4. Procédé pour la préparation de concentrés de pigments selon la revendication 3, **caractérisé par le fait que** les composants sont mélangés au-dessus du point de fusion de l'acier.

5. Procédé pour la préparation de concentrés de pigments selon les revendications 1 à 2, **caractérisé par le fait que** les composants sont mélangés au-dessus du point de fusion de la cire et du polymère support.

6. Produits moulés en matière synthétique et produits plats en matière synthétique, colorés avec des concentrés de pigments selon les revendications 1 à 5.

7. Procédé pour la coloration de produits moulés et de produits plats selon la revendication 6 avec des concentrés de pigments selon les revendications 1 à 4, **caractérisé par le fait que** les composants sont mélangés par homogénéisation à l'état fondu.
